(19) Europäisches Patentamt
European Patent Office
Office européen des brevets

(11) Veröffentlichungsnummer : **0 408 590 B1**

# (12) EUROPÄISCHE PATENTSCHRIFT

(45) Veröffentlichungstag der Patentschrift :
**09.10.91 Patentblatt 91/41**

(51) Int. Cl.[5] : **B60K 17/30**

(21) Anmeldenummer : **89903124.9**

(22) Anmeldetag : **16.03.89**

(86) Internationale Anmeldenummer :
**PCT/EP89/00280**

(87) Internationale Veröffentlichungsnummer :
**WO 89/08566 21.09.89 Gazette 89/23**

## (54) STARRE, ANGETRIEBENE LENKACHSE.

(30) Priorität : **19.03.88 DE 3809314**

(43) Veröffentlichungstag der Anmeldung :
**23.01.91 Patentblatt 91/04**

(45) Bekanntmachung des Hinweises auf die Patenterteilung :
**09.10.91 Patentblatt 91/41**

(84) Benannte Vertragsstaaten :
**BE DE GB IT SE**

(56) Entgegenhaltungen :
**DE-B- 1 081 776**
**FR-A- 322 004**
**GB-A- 517 465**
**GB-A- 570 298**
**US-A- 1 720 064**
**US-A- 3 307 888**

(73) Patentinhaber : **ZAHNRADFABRIK FRIEDRICHSHAFEN AKTIENGESELLSCHAFT**
**Löwentaler Strasse 100 Postfach 2520**
**W-7990 Friedrichshafen 1 (DE)**

(72) Erfinder : **SCHUSTER, Max**
**Bratfischwinkel 8**
**W-8390 Passau (DE)**

EP 0 408 590 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine starre, angetriebene Lenkachse mit Radnabengetrieben und einem Achskörper, an dessen Enden nach außen weisende Lagerbolzen vorgesehen sind, an denen mittels Kegelrollenlager Radnabenträger um eine zur Radebene geneigte Achse schwenkbar angelenkt sind.

Solche Lenkachsen sind bekannt (GB-A 517 465). Als Radnabengetriebe ist ein Planetengetriebe vorgesehen, dessen Steg mit dem Radnabenträger drehfest verbunden ist, so daß sich die Reaktionskräfte aus dem Radnabengetriebe über den Radnabenträger an den Kegelrollenlagern abstützen. Diese Kräfte aus dem Antrieb der Achse vergrößern die Belastung der Schwenklager zusätzlich zu den Belastungen, die sich aus dem Fahrzeuggewicht, den Arbeitsgeräten und der Fahrdynamik des Fahrzeugs ergeben. Diese Belastungen sind vor allem bei Auto- und Mobilkrane extrem hoch.

Zur Aufnahme der hohen Belastungen müssen die Lager, Lagerbolzen und die angrenzenden Bauteile des Achskörpers und des Radnabenträgers entsprechend dimensioniert werden, was zu aufwendigen und großvolumigen Konstruktionen geführt hat. Der große Platzbedarf bedingt seinerseits wiederum, daß die Radnabe in axialer und radialer Erstreckung im Bereich des Reduktionsgetriebes und/oder des Achsgelenkes nicht mehr innerhalb des Radkörpers, bestehend aus Felge und Reifen, untergebracht werden kann. Vorstehende Teile sind im rauhen Einsatz selbst gefährdet oder stellen eine Gefahr für Hilfspersonal oder Einrichtungen dar, die beim Manövrieren im Wege stehen. Durch diese Umstände ist der Konstrukteur häufig gehindert, den Abstand zwischen dem Schwenkpunkt der Radnabe und der Radmittelebene so zu verringern, wie es notwendig wäre, um einen ausreichenden Einschlagwinkel der Räder oder einen gewünschten Lenkrollradius zu erhalten oder die Belastungsmomente klein zu halten.

Der Erfindung liegt die Aufgabe zugrunde, bei einer Lenkachse der eingangs beschriebenen Art durch ein kompakt bauendes Schwenklager die Einbaubedingungen der Achse zu verbessern, insbesondere bei hohen statischen und/oder dynamischen Belastungen. Sie wird erfingungsgemäß dadurch gelöst, daß die Lagerbolzen mit einer konischen Umfangsfläche in eine konische Bohrung des Achskörpers eingreifen und die Kegelrollenlager axial abstützen.

Bei der erfindungsgemäßen Gestaltung werden die Lagerbolzen durch die Axialkraftkomponenten der Kegelrollenlager in die konischen Bohrungen gedrückt, wobei mit zunehmender Lagerbelastung der Sitz fester wird. Dadurch wird selbst bei hohen wechselnden sicheren Belastungen verhindert, daß sich der Lagerbolzen lockert. Der kegelige Sitz des Lagerzapfens mit seiner sicheren Anpressung beansprucht nur einen geringen Bauraum, so daß das untere Schwenklager bei sonst gleichen Rahmenbedingungen tief in den Radkörper hineinragen kann. Infolgedessen gelangt der Schwenkpunkt der Radnabe nahe an die Radmittelebene, wodurch der Lenkeinschlag des Rades verbessert und der Lenkrollradius bei entsprechender Neigung der Schwenkachse verkleinert wird.

Bei einer anderen Lösung der Aufgabe können sich die Kegelrollenlager axial am Achskörper abstützen. Die Lagerbolzen werden in diesem Falle durch Spannschrauben mit einer Vorspannung gegen den Kegelsitz im Achskörper gepreßt. Zur Erzielung einer ausreichenden Spannlänge ist die Spannschraube durch eine koaxiale Bohrung des Lagerbolzens geführt.

In einer weiteren Ausgestaltung wird vorgeschlagen, daß die konische Umfangsfläche des Lagerbolzens in axialer Richtung unterteilt ist. Dadurch wird erreicht, daß der konische Sitz des Lagerbolzens an zwei axial voneinander entfernten Umfangbereichen trägt und damit in der Lage ist, große Biegemomente aufzunehmen.

Gemäß einer weiteren Ausgestaltung wird vorgeschlagen, daß der Lagerbolzen einen Doppelkonus bildet, von denen der eine unmittelbar als Lauffläche für die Kegelrollenlager dient. Dadurch kann der Durchmesser noch weiter verringert werden. Die Lagerbolzen selbst sind als kleine Einzelteile leicht aus einem geeigneten Werkstoff herzustellen und entsprechend zu behandeln, z. B. zu härten und zu schleifen.

Lagerbolzen mit konischem Sitz in einer Fahrzeugachse sind an sich bekannt (DE-A 29 45 802). Die für Pkw bestimmte Radaufhängung und die entsprechend ausgelegte Lagerung ist nicht geeignet für große Belastungen, wie sie bei Lenkachsen mit Radnabengetrieben auftreten.

In der Zeichnung sind Ausführungsbeispiele der Erfindung dargestellt.

Fig. 1 zeigt ein radseitiges Ende einer erfindungsgemäßen Lenkachse mit Felge und Rad in einem teilweisen Längsschnitt.

Fig. 2 zeigt in einem vergrößerten Maßstab eine Einzelheit II in Fig. 1.

Fig. 3 zeigt eine Variante der Ausführung nach Fig. 2

An einem Achskörper 1 ist um eine Schwenkachse 2 eine Nabe 3 schwenkbar angelenkt. Diese besteht aus einem Nabenträger 4, einer Radaufnahme 5 und zwischen diesen angeordnete Radlager 6, die als Kegelrollenlager ausgebildet sind und sich axial an einem inneren Ringbund 7 der Radaufnahme 5 abstützen. Die Radlager 6 werden nach außen von einem Nabengehäuse 8 abgedeckt, das an der Radaufnahme 5 lösbar befestigt ist und an seinem äußeren Umfang eine Felgenzentrierung 9 aufweist. An der Radaufnahme 5 ist eine

Felge 10, die einen Reifen 11 trägt, mittels Schrauben 12 befestigt. Die Mittelebene des Rades, das aus der Felge 10 und dem Reifen 11 gebildet wird, ist mit 13 bezeichnet. Zwischen ihr und der Schwenkachse 2 ist ein Winkel α eingeschlossen, der sich aus den Winkeln zusammensetzt, die eine in Fahrtrichtung des Fahrzeuges liegende senkrechte Ebene mit der Mittelebene 13 und der Schwenkachse 2 einschließen. Diese Teilwinkel werden allgemein mit Radsturz und Spreizung bezeichnet. Der Winkel beträgt zweckmäßigerweise 5 bis 10°.

Die Schwenkachse 2 schneidet die Rotationsachse 14 des Rades in einem Punkt 15 und die Mittelebene 13 in einem Punkt 16. Der Schnittpunk der Mittelebene 13 mit der Rotationsachse 14 trägt die Ziffer 17. Für einen guten Einschlagwinkel des Rades ist es wichtig, daß der Abstand zwischen dem Punkt 15 und dem Schnittpunkt 17 möglichst klein ist. Dabei muß jedoch darauf geachtet werden, daß das Nabengehäuse 8 nicht oder nur geringfügig über die äußere Kontur 18 des Reifens 11 herausragt.

Der Punkt 16 liegt oberhalb einer Aufstandsfläche des Reifens 11, so daß die Schwenkachse 2 die Aufstandsfläche 19 weiter außerhalb trifft als die Mittelebene 13. Der Abstant 20 zwischen der Schwenkachse 2 und der Mittelebene 13 in der Aufstandsfläche 19 heißt Lenkrollradius; im vorliegenden Fall ist er negativ und klein.

Um die oben stehenden Forderungen erfüllen zu können, muß der Gelenkkopf 21, der von einem gabelförmigen Ende 22 des Nabenträgers 4 und einem gabelförmigen Ende 23 des Achskörpers 1 gebildet wird, kompakt gestaltet sein. Dabei umfaßt das Ende 22 das Ende 23 des Achskörpers 1.

Koaxial zu Schwenkachse 2 sind im gabelförmigen Ende 23 des Achskörpers 1 nach außen, zum gabelförmigen Ende 22 des Nabenträgers 4 weisende Lagerbolzen 24 eingesetzt, und zwar mit einem konischen Sitz, der durch die nach innen sich verjüngende konische Umfangsfläche 25 des Lagerbolzens 24 und eine entsprechende konische Bohrung 26 gebildet wird. Die konische Umfangsfläche 25 oder die konische Bohrung 26 wird zweckmäßigerweise in Achsrichtung durch eine Nut 27 unterbrochen. Dadurch ergibt sich in den Randbereichen eine definierte Anlage, die zur Aufnahme von Biegemomenten besonders geeignet ist und dem Lagerbolzen 24 einen sicheren Sitz gibt.

Zwischen dem Lagerbolzen 24 und dem Nabenträger 4, der im übrigen ein- oder mehrteilig ausgebildet sein kann, sind Kegelrollenlager 28 angeordnet, deren innerer Laufring 29 sich axial und radial am Lagerbolzen 24 abstützt und deren äußerer Lagerring 30 in einer Lagerbohrung 31 des Nabenträgers 4 geführt ist. Ein Lagerdeckel 32 deckt die Lagerbohrung 31 ab und spannt das Kegelrollenlager 28 über eine Distanzscheibe 33 definiert vor. Die Vorspannung überträgt sich über den Lagerbolzen 24 auf dessen konischen Sitz. Die Kegelrollenlager 28 sind nach außen durch Dichtungen 34 im Lagerdeckel und eine Gleitdichtung 35 zwischen dem Nabenträger 4 und dem Achskörper 1 abgedichtet.

Durch die gute Abstützung im Schwenklagerbereich und die definierte Vorspannung ist es möglich, den Gelenkkopf 21 sehr kompakt zu bauen, so daß der Lenkrollradius 20 und der Abstand von Punkt 15 und 17 klein gehalten werden können, ohne daß die Nabe 4 aus dem Radkörper nennenswert herausragt. Eine Verbesserung ergibt sich ferner, wenn der innere Lagerring 29 mit dem Lagerbolzen 24 einstückig ausgebildet ist, so daß sich ein Lagerbolzen in Form eines Doppelkonus ergibt und die Rollen der Rollenlager unmittelbar auf einer Konusfläche des Lagerbolzens laufen. Die Lagerbolzen können aus Lagerstahl hergestellt werden und in geeigneter Weise wärmebehandelt und geschliffen werden.

Der kleine Lenkrollradius 20 und der geringe Abstand zwischen den Punkten 15 und 17 wirkt sich besonders günstig bei Kranfahrzeugen aus, bei denen die Abstützkräfte unmittelbar über Stützstreben an den Achsgelenken abgestützt werden. Infolge des günstigen Kraftflusses werden die Bauteile nur durch geringe Momente belastet und können deshalb klein dimensioniert werden.

Bei der Ausführung nach Fig. 3 ist der Lagerbolzen 24, der einstückig mit einem Lagerauge der Stützstrebe 36 ausgebildet ist, über eine Spannschraube 37 und eine Spannmutter 38 gegen den konischen Sitz verspannt. Die Bohrung 52 der Spannschraube ist nach außen durch eine Dichtungskappe 39 verschlossen.

Zum Einschlagen der Räder sind mit dem Nabenträger 4 nicht näher dargestellt Lenkgestänge verbunden. Eine Antriebswelle 40, die über ein nicht näher dargestelltes Achsdifferential angetrieben wird, treibt ihrerseits über ein Universagelenk 41 in Doppelgelenkbauweise und über eine Schaftwelle 42 mit einem Sonnenrad 43 das als Planetenträger ausgebildete Nabengehäuse 8 an. In diesem sind Planeten 44 auf Planetenbolzen 45 mittels Nadellager 46 drehbar gelagert. Die Planeten 44 kämmen einerseits mit dem Sonnenrad 43 und einem mit einem Hohlradträger 47 am Nabenträger 4 befestigten Hohlrad 48.

Weitere Dichtunger 49, 50, 51 dichten Schmieröl führende Gehäuseteile gegenüber der Umgebung ab.

Bezugszeichen

| | |
|---|---|
| 1 | Achskörper |
| 2 | Schwenkachse |
| 3 | Nabe |
| 4 | Nabenträger |
| 5 | Radaufnahme |
| 6 | Radlager |
| 7 | Ringbund |
| 8 | Nabengehäuse |
| 9 | Felgenzentrierung |
| 10 | Felge |
| 11 | Reifen |
| 12 | Schraube |
| 13 | Mittelebene |
| 14 | Rotationsachse des Rades |
| 15 | Punkt |
| 16 | Punkt |
| 17 | Schnittpunkt |
| 18 | äußere Kontur |
| 19 | Aufstandsfläche |
| 20 | Abstand |
| 21 | Gelenkkopf |
| 22 | gabelförmiges Ende des Nabenträgers |
| 23 | gabelförmiges Ende des Achskörpers |
| 24 | Lagerbolzen |
| 25 | konische Umfangsfläche |
| 26 | konische Bohrung |
| 27 | Nut |
| 28 | Kegelrollenlager |
| 29 | innerer Lagerring |
| 30 | äußerer Lagerring |
| 31 | Lagerbohrung |
| 32 | Lagerdeckel |
| 33 | Distanzscheibe |
| 34 | Dichtung |
| 35 | Gleitdichtung |
| 36 | Stützstreben |
| 37 | Spannschraube |
| 38 | Spannmutter |
| 39 | Dichtungskappe |
| 40 | Antriebswelle |
| 41 | Universalgelenk |
| 42 | Schaftwelle |
| 43 | Sonnenrad |
| 44 | Planeten |
| 45 | Planetenbolzen |
| 46 | Nadellager |
| 47 | Hohlradträger |
| 48 | Hohlrad |
| 49 | Dichtung |
| 50 | Dichtung |
| 51 | Dichtung |
| 52 | koaxiale Bohrungen |

**Patentansprüche**

1. Starre, angetriebene Lenkachse mit Radnabengetrieben (43, 44, 45, 46, 47, 48) und einem Achskörper (1), an dessen Enden nach außen weisende Lagerbolzen (24) vorgesehen sind, an denen mittels Kegelrollenlager (28) Radnabenträger (4) um eine zur Radmittelebene (13) geneigte Achse (2) schwenkbar angelenkt sind, dadurch **gekennzeichnet**, daß die Lagerbolzen (24) mit einer konischen Umfangsfläche (25) in eine konische Bohrung (26) des Achskörpers (1) eingreifen und die Kegelrollenlager (28) axial abstützen.

2. Lenkachse nach Anspruch 1, dadurch **gekennzeichnet**, daß die konische Umfangsfläche (25) bzw. die konische Bohrung (26) in axialer Richtung durch eine Umfangsnut (27) unterteilt ist.

3. Lenkachse nach dem Oberbegriff von Anspruch 1 oder nach Anspruch 2, dadurch **gekennzeichnet**, daß die Lagerbolzen (24) eine koaxiale Bohrung (52) aufweisen, durch die eine Spannschraube (37) gesteckt ist.

4. Lenkachse nach Anspruch 1, dadurch **gekennzeichnet**, daß der Lagerbolzen (24) als Doppelkonus ausgebildet ist, von denen der eine als Lauffläche für das Kegelrollenlager (28) dient.

## Claims

1. A rigid, driven steering axle comprising wheel hub gears (43, 44, 45, 46, 47, 48) and an axle body (1), at whose ends outwardly facing bearing bolts (24) are provided, to which wheel hub supports (4) are articulatedly connected by means of tapered roller bearings (28) so as to be pivotable about an axis (2) inclined relative to the central plane (13) of the wheel, characterised in that the bearing bolts (24) engage with a conical circumferential surface (25) in a conical bore (26) in the axle body (1) and axially support the tapered roller bearings (28).

2. A steering axle according to claim 1, characterised in that the conical circumferential surface (25) or the conical bore (26) is divided in the axial direction by a circumferential groove (27).

3. A steering axle according to the preamble of claim 1 or claim 2, characterised in that the bearing bolts (24) comprise a coaxial bore (52), through which a tightening screw (37) is inserted.

4. A steering axle according to claim 1, characterised in that the bearing bolt (24) is designed as a double cone, one cone acting as a running surface for the tapered roller bearing (28).

## Revendications

1. Essieu de direction rigide entraîné comportant des engrenages de moyeu de roue (43, 44, 45, 46, 47, 48) et un corps d'essieu (1) dont les extrémités sont équipées de tourillons de palier (24) qui pointent vers l'extérieur et sur lesquels sont articulés au moyen de roulements à rouleaux coniques (28) des supports de moyeu de roue (4) pour pouvoir pivoter autour d'un axe (2) incliné par rapport au plan médian de roue (13), caractérisé en ce que les tourillons de palier (24) pénètrent par une surface périphérique conique (25) dans un alésage conique (26) du corps d'essieu (1) et supportent axialement les roulements à rouleaux coniques (28).

2. Essieu de direction suivant la revendication 1, caractérisé en ce que la surface périphérique (25) ou l'alésage conique (26) est divisé en direction axiale par une rainure périphérique (27).

3. Essieu de direction suivant le préambule de la revendication 1 ou suivant la revendication 2, caractérisé en ce que les tourillons de palier (24) présentent un perçage coaxial (52) au travers duquel est enfoncé une vis de serrage (37).

4. Essieu de direction suivant la revendication 1, caractérisé en ce que le tourillon de palier (24) est réalisé sous la forme d'un cône double dont l'un sert de surface de roulement pour le roulement à rouleaux coniques (28).

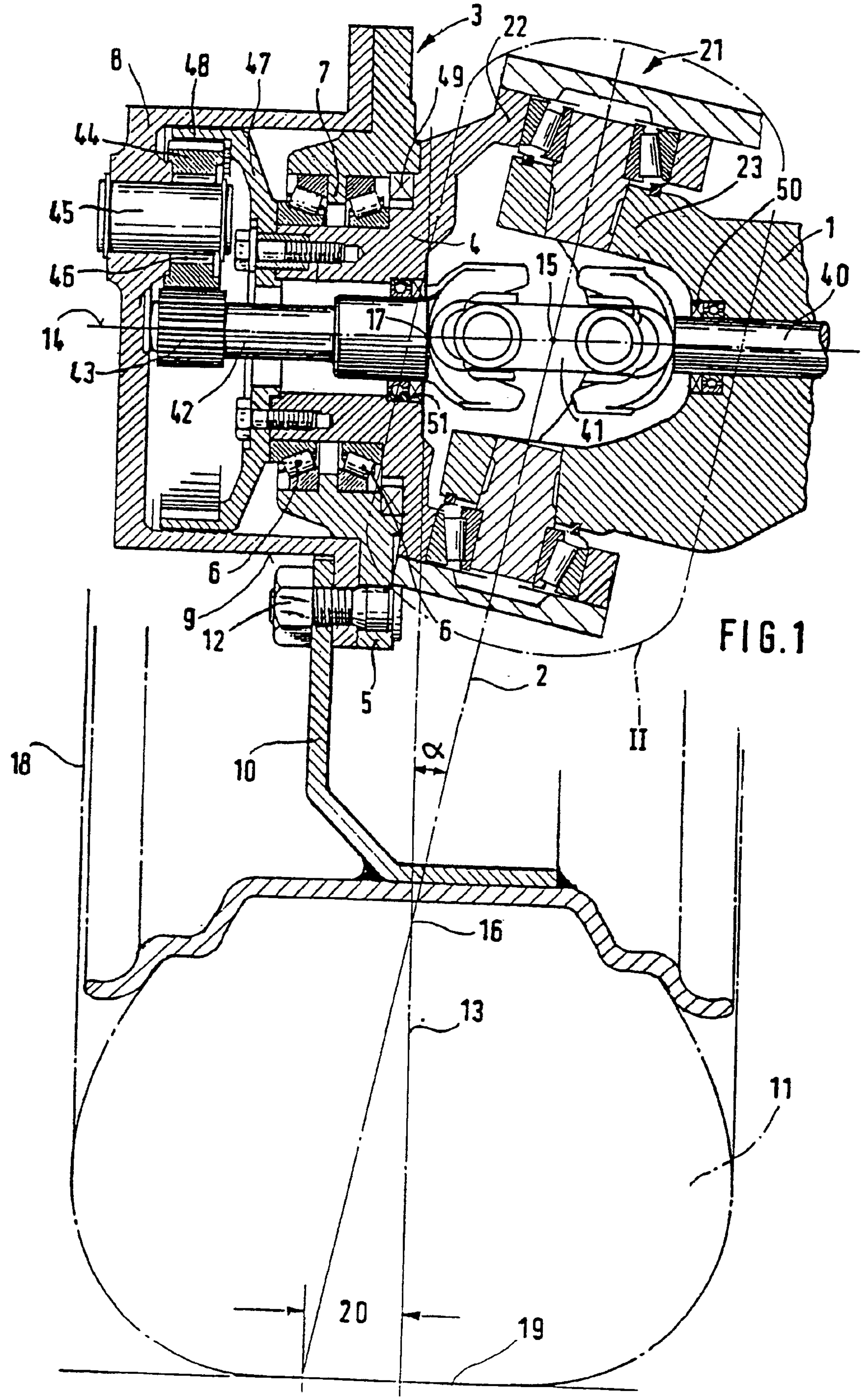
3
22
21
8
48
47
7
49
44
23
50
45
1
15
40
4
46
17
14
43
42
41
51
6
9
12
6
5
2
II
18
10
α
16
13
11
20
19

FIG.1

FIG. 2

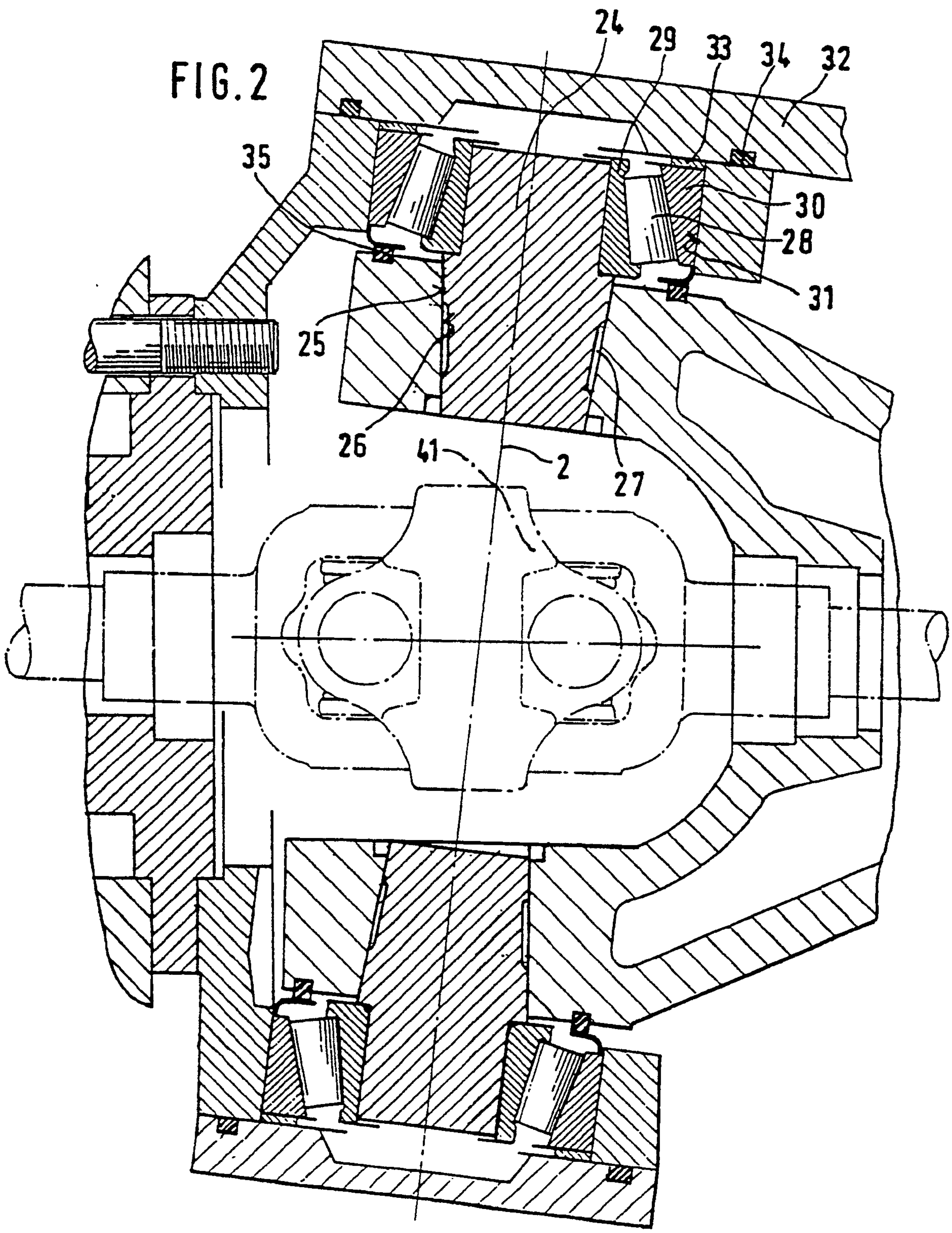

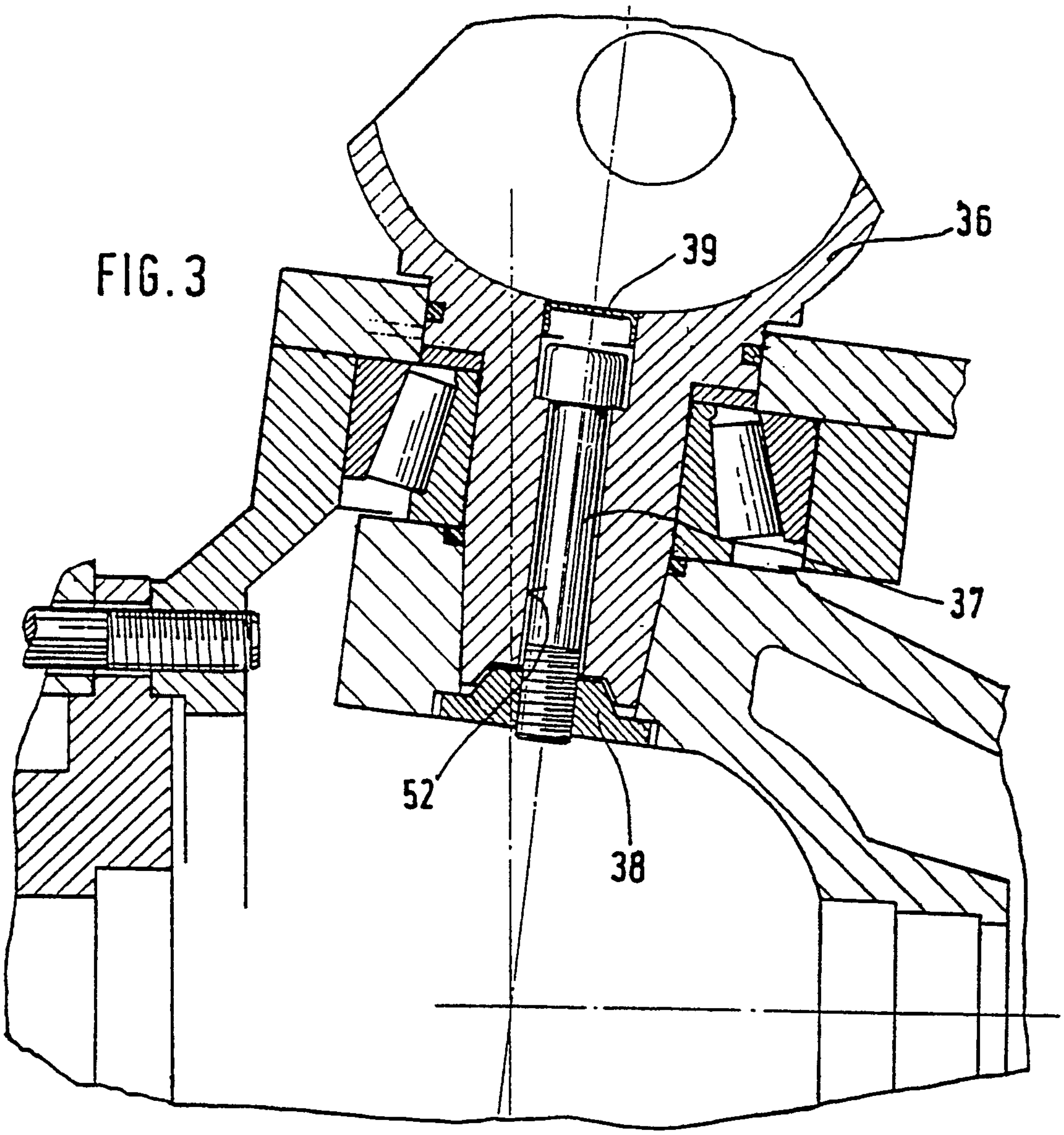


FIG. 3